# EUROPEAN PATENT APPLICATION

(11) **EP 0 960 571 A2**
(43) Date of publication of application: **01.12.1999**
(21) Application number: 99303497.4
(22) Date of filing: 05.05.1999
(51) Int. Cl.: A23L 1/236

(54) **Sweetener formulation**

(30) Priority: 05.05.1998 GB 9809473
(71) Applicant: Scanchem UK Limited, Macclesfield SK10 1AA (GB)
(72) Inventor: The designation of the inventor has not yet been filed
(74) Representative: Brierley, Anthony Paul

(57) **Abstract**

A sweetener formulation comprises a first artificial sweetener, for example acesulfame K, a second artificial sweetener, for example aspartame, a flavour means, for example raspberry ketone, a first flavour enhancer, for example maltol or ethyl maltol, a second flavour enhancer, for example glycine and a salt, for example sodium chloride. The formulation is found to have good taste and mouth feel and stablility.

## Description

This invention relates to a sweetener formulation and provides a sweetener formulation *per se*, a method of sweetening using such a formulation and a material when sweetened with such a formulation.

The use of artificial sweeteners, especially low calorie sweeteners, for sweetening foods, beverages, animal feeds, pharmaceuticals, cosmetics, toothpastes etc. is widespread. For some applications, for example food and/or beverage applications, it is desirable for artificial sweeteners to be as similar as possible to saccharose in terms of taste and mouth feel. Furthermore, artificial sweeteners should have acceptable shelf life in products.

Many artificial sweeteners and formulations of same have been proposed. However, the problem of providing a sweetener formulation which mimics the properties of saccharose still exists. It is an object of the present invention to address this problem.

According to a first aspect of the invention, there is provided a sweetener formulation comprising a first artificial sweetener and a flavour means.

By providing a flavour means, a formulation can be prepared having excellent sweetener properties, for example taste, mouth feel and shelf life.

Said first sweetener may be any artificial sweetener. It is preferably substantially non-calorific and/or substantially non-cariogenic. It is preferably a solid at ambient temperature. It is preferably a solid at 25°C, especially at 50°C. It suitably has a solubility in water at 25°C of at least 0.05 g/l, preferably at least 0.1 g/l, more preferably at least 0.15 g/l, especially at least 0.20 g/l.

Said first sweetener may be selected from the following groups:
(a) an acesulpham salt, especially a potassium or calcium salt, of 3,4-dihydro-5-methyl-1,2,3-oxathiazine-4-one-2,2-dioxide or of 3,4-dihydro-6-methyl-1,2,3-oxathiazine-4-one-2,2-dioxide. Of the aforesaid, the potassium salt of 3,4-dihydro-5-methyl-1,2,3,-oxathiazine-4-one-2,2-dioxide and the calcium salt of 3,4-dihydro-6-methyl-1,2,3-oxathiazine-4-one-2,2-dioxide are preferred;
(b) a sulphimide sweetener, for example saccharin or one of its non-toxic, preferably water-soluble salts, especially its sodium salt;
(c) a sulphamate sweetener, for example a non-toxic water-soluble salt, suitably the sodium or calcium salt, of cyclohexyl sulphamic acid, (i.e. sodium cyclamate and calcium cyclamate) ;
(d) an aspartyl peptide ester sweetener, preferably aspartyl phenylalanine methyl ester;
(e) a dihydrochalcone sweetener, for example neohesperidin or naringine dihydrochalcone or one of their non-toxic water-soluble salts;
(f) sucralose;
(g) thaumatin;
(h) stevioside;
(i) glycyrrhin.

Unless otherwise stated in this specification, a non-toxic water-soluble salt may be selected from sodium, potassium, ammonium and calcium salts.

Of the aforesaid, said first sweetener is preferably selected from the groups referenced (a), (b), (c), (d) and (e), more preferably from the groups referenced (a), (b), (c) and (d), especially, from the groups referenced (a), (b) and (d).

Said sweetener formulation may include a second artificial sweetener. Said second artificial sweetener may have any of the properties of the first artificial sweetener described herein and/or may be selected from any of the sweeteners described in groups (a) to (i) provided, of course, that the first and second artificial sweeteners are not identical.

Said sweetener formulation could include a third artificial sweetener having any feature of the second artificial sweetener described herein. Said formulation, however, preferably does not include a third artificial sweetener. It preferably does, however, include a second artificial sweetener.

Said formulation may include at least 30wt%, suitably at least 40 wt%, preferably at least 45 wt%, more preferably at least 48 wt%, especially at least 49 wt% of said first artificial sweetener. Said formulation may include less than 90 wt%, suitably less than 80 wt%, preferably less than 70 wt%, more preferably less than 60 wt%, especially less than 50 wt% of said first artificial sweetener.

Where said formulation includes a second artificial sweetener, said formulation may include at least 10 wt%, suitably at least 30 wt%, preferably at least 45 wt%, more preferably at least 48 wt%, especially at least 49 wt% of said second sweetener. Said formulation may include less than 90 wt%, suitably less than 80 wt%, preferably less than 70 wt%, more preferably less than 60 wt%, especially less than 50 wt% of said second sweetener.

Where said formulation includes a first and second sweetener, the ratio of the wt% of the first sweetener to the second sweetener may be in the range 1:10 to 10:1, preferably in the range 2:5 to 5:2, more preferably in the range 1:1.5 to 1.5 to 1 and, especially, about 1:1.

Preferred combinations of first and second sweeteners include a compound in group (a), especially acesulfame K, and a compound in group (d), especially aspartame, preferably in a ratio in the range 1:2 to 2:1; a compound in group (a), especially acesulfame K, and a compound in group (c), especially sodium cyclamate, preferably in the range 1:2 to 1:12; a compound in group (a), especially acesulfame K, and a compound in group (b), especially the sodium salt of saccharin, preferably in the range 1:2 to 10:1; and a compound in group (a), especially acesulfame K, and a compound in group (e), especially neohesperidindihydrochalcone, preferably in the range 5:1 to 20:1.

Of the above, a preferred combination comprises a sweetener from groups (a) and (d) especially as described above.

Said flavour means of said formulation preferably comprises a fruit flavour enhancer. For example, it could be ethyl butyrate or jasmine oil. More preferably, it is a red fruit flavour enhancer.

Said flavour means is preferably non-calorific and/or substantially non-cariogenic. It is preferably a solid at a temperature of 25°C, preferably at 50°C, more preferably at 75°C. Its melting point may be less than 300°C, preferably less than 200°C, more preferably less than 150°C, especially less than 100°C. It preferably has a solubility of at least 0.02 g/l, more preferably at least 0.03 g/l, especially at least 0.04 g/l.

Said flavour means is preferably of general formula

R¹-R³-COR²

where R¹ represents an optionally-substituted phenyl group; R² represents an optionally-substituted alkyl group; and R³ represents an optionally-substituted alkylyl group.

Unless otherwise stated, where a group is stated to be optionally substituted, it may be substituted by one or more substitutents selected from halogen atoms, especially fluorine, chlorine and bromine atoms, a hydroxy, nitro, carboxy and amino group, and an optionally-substituted, especially an unsubstituted, alkyl, alkenyl, alkoxy, acyl, acyloxy and alkoxycarbonyl group.

Unless otherwise stated, an alkyl or alkenyl group described herein may have up to 8 carbon atoms, preferably up to 6 carbon atoms, more preferably up to 4 carbon atoms.

Preferably, said flavour means is of general formula.

R¹ - (CH₂)ₙ-COR²

where R¹ and R² are as described above and n represents 1 to 4.

Where R¹ is optionally-substituted, it may be substituted by 0-3, preferably 0-2, groups selected from hydroxy, alkoxy, for example C₁ to C₂ alkoxy, carboxy and carboxylic acid ester groups. Of these, substitution by hydroxy and alkoxy, especially methoxy, groups is preferred.

Where R¹ is substituted, it is preferably substituted in the 3-, 4-, or 5- position.

R¹ suitably represents 4-hydroxyphenyl, 3-hydroxyphenyl, phenyl or 3,5-dimethoxyphenyl. R¹ preferably represents 4-hydroxyphenyl or 3-hydroxyphenyl. It more preferably represents 4-hydroxyphenyl.

n preferably represents 1 to 3, more preferably 2.

Where R² is substituted, it may be substituted by hydroxy, alkoxy, carboxy or a carboxylic acid ester group. Preferably, it is unsubstituted.

R² may represent a C₁-C₆ alkyl group, preferably a C₁-C₄ alkyl group, more preferably a C₁-C₂ alkyl group, especially a methyl group.

Most preferably, said flavour means is 4-(4-hydroxyphenyl)-2-butanone, known as raspberry ketone.

Said sweetener formulation may include at least 0.01 wt%, suitably at least 0.03 wt%, preferably at least 0.05% wt%, more preferably at least 0.07 wt%, especially at least 0.09 wt% of said flavour means. Said formulation may include less than 1 wt%, suitably less than 0.7 wt%, preferably less than 0.5 wt%, more preferably less than 0.3 wt%, especially less than 0.11 wt%.

The ratio of the weight of said first artificial sweetener to said flavour means may be at least 300, suitably at least 400, preferably at least 430, more preferably at least 460, especially at least 480. The ratio may be less than 700, suitably less than 600, preferably less than 570, more preferably less than 540, especially less than 510.

Where said formulation includes a second artificial sweetener as described, the ratio of the weight of said second artificial sweetener to said flavour means may be as described above for the ratio of said first artificial sweetener to said flavour means. For the avoidance of doubt the two ratio described may be independently selected.

Said sweetener formulation may additionally include a first flavour enhancer, wherein said flavour means and said flavour enhancer are different compounds.

Said first flavour enhancer is preferably a solid at a temperature of 25°C, preferably at 50°C, more preferably at 100°C, especially at 150°C.

Said first flavour enhancer may comprise a heterocyclic compound which preferably includes an oxygen heteroatom. Said heterocyclic ring is preferably unsaturated. It preferably incorporates a carbonyl group into its ring. It is preferably substituted by an alkyl, especially a C₁₋₄, more preferably a C₁₋₂, alkyl group and/or a hydroxy and/or alkoxy, a C₁₋₄, preferably a C₁₋₂ alkoxy group. More preferably, it is substituted by a hydroxy and/or an alkyl, especially a methyl or ethyl group. Most preferably, it is substituted by a hydroxy and a methyl or an ethyl group. Said first flavour enhancer is preferably a pyrone derivative, especially maltol or ethyl maltol.

A less preferred first flavour enhancer is isomerized hop extract.

Said sweetener formulation may include at least 0.02 wt%, suitably at least 0.05 wt%, preferably at least 0.08 wt%, more preferably at least 0.1 wt%, especially at least 0.2 wt % of said first flavour enhancer. Said formulation may include less than 2 wt%, suitably less than 1 wt%, preferably less than 0.8 wt%, more preferably less than 0.5 wt%, especially less than 0.3 wt% of said first flavour enhancer.

The ratio of the weight of said flavour means to said first flavour enhancer may be at least 0.1, suitably at least 0.2, preferably at least 0.3, more preferably at least 0.35, especially at least 0.4. Said ratio may be less than 2, suitably less than 1, preferably less than 0.8, more preferably less than 0.6, especially less than 0.5.

Said sweetener formulation may include a second flavour enhancer, wherein said flavour means and said second flavour enhancer are different compounds.

Said second flavour enhancer is suitably a solid at a temperature of 25°C, preferably at 50°C, more preferably at 150°C, especially at 250°C.

Said second flavour enhancer may include an optionally-substituted alkyl group, suitably a C₁₋₄, preferably a C₁₋₂, more preferably a methyl group. Preferred substitutents include carboxy, amino, hydroxy and -SH, with carboxy and amino being especially preferred. Said enhancer may be an amino acid, suitably selected from glycine, alanine and valine. It is preferably glycine or alanine, especially glycine.

Said sweetener formulation may include at least 0.01 wt%, suitably at least 0.03 wt%, preferably at least 0.05 wt%, more preferably at least 0.07 wt% of said second enhancer. Said formulation may include less than 1 wt%, suitably less than 0.5 wt%, preferably less than 0.2 wt%, more preferably less than 0.1 wt%, especially less than 0.08 wt% of said second enhancer.

The ratio of the weight of said flavour means to said second flavour enhancer may be at least 0.1, suitably at least 0.4, preferably at least 0.6, more preferably at least 0.8, especially at least 1.2. The ratio may be less than 3, suitably less than 2.5, preferably less than 2, more preferably less than 1.8, especially less than 1.5.

Said sweetener formulation may include a salt. Said salt may have a cation selected from group I and group II metals and ammonium. Said cation is preferably selected from sodium, potassium, calcium and magnesium, with sodium and potassium being especially preferred. The anion of said salt is preferably chloride or carbonate, with chloride being especially preferred. Preferably, said salt is potassium chloride or sodium chloride, with the latter being especially preferred.

Said sweetener formulation may include at least 0.002 wt%, suitably at least 0.005 wt%, preferably at least 0.008 wt%, more preferably at least 0.01 wt%, especially at least 0.02 wt% of said salt. Said formulation may include less than 0.2 wt%, suitably less than 0.1 wt%, preferably less than 0.08 wt%, more preferably less than 0.05 wt%, especially less than 0.03 wt% of said salt.

The ratio of the weight of said flavour means to said salt may be at least 1, suitably at least 2, preferably at least 3, more preferably at least 3.5, especially at least 4. Said ratio may be less than 20, suitably less than 10, preferably less than 8, more preferably less than 6, especially less than 5.

Said sweetener formulat-ion, in the absence of any diluent, is suitably at least about 100; preferably at least about 150, more preferably at least about 200, especially at least about 220 times sweeter than conventional sugar. Said sweetness may be less than 400, preferably less than 300, more preferably less than 260 times sweeter than sugar.

Said sweetener formulation is preferably a solid at ambient temperature, preferably at 25°C and more preferably at 50°C. Said sweetener formulation suitably has a solubility of at least 0.2, preferably at least 0.3, more preferably at least 0.4 g/l.

According to a second aspect of the present invention, there is provided a diluted sweetener formulation comprising said formulation of said first aspect in combination with a diluent. Said diluted formulation is preferably diluted so that it has a sweetness of within 10%, preferably 50%, of the sweetness of conventional sugar. Additionally, said diluted formulation is preferably a solid under ambient conditions.

According to a third aspect of the present invention, there is provided a method of sweetening comprising contacting a material to be sweetened with a formulation according to said first or said second aspect.

According to a fourth aspect of the present invention, there is provided a material sweetened with a formulation according to said first or said second aspect.

Said material is preferably for human or animal consumption especially for human consumption. It maybe a food, drink, medicine, toothpaste or the like.

Any feature of any aspect of any invention or embodiment described herein may be combined with any feature of any aspect of any other invention or embodiment described herein.

The invention will now be described by way of example.

### Example 1 - Preparation of sweetener formulation

A sweetener formulation was prepared by blending the following components in the amounts indicated. The particle sizes of each of the components was selected to aid the mixing process.

| Component | Amount (g) | wt% |
|---|---|---|
| Acesulfame K | 497.811 | 49.7811 |
| Aspartame | 497.811 | 49.7811 |
| Maltol | 2.413 | 0.2413 |
| Glycine | 0.724 | 0.0724 |
| Raspberry Ketone | 1.00 | 0.100 |
| Sodium Chloride | 0.241 | 0.0241 |

### Example 2 - Assessment of formulation

(a) Sweetness - the formulation was assessed for sweetness and found to be approximately 240 times as sweet as conventional sugar (sucrose).
(b) Taste and Mouth feel - this was assessed organoleptically by a taste panel and found to be close in both taste and mouth feel to sugar. Additionally, it was found to represent an improvement over the use of sweetener combinations (e.g. Acesulfame K/Aspartame) alone.
(c) Stability - The shelf life of the formulation was assessed by incorporating the formulation into a non-alcoholic drink and then carrying out HPLC, at various times, to assess how much of the sweetener was remaining. It was found that the use of the components in addition to the sweeteners acesulfame K and aspartame helps to mask the degradation of the sweeteners and thereby help to maintain the quality of taste of the drink throughout its shelf life.

### Example 3 - Beverage formulation

A beverage was prepared by dissolving approximately 0.47g of the formulation of Example 1 in 1 litre of water incorporating cola flavouring. The beverage prepared was assessed organoleptically and found to have excellent sweetness properties.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A sweetener formulation comprising a first artificial sweetener and a flavour means.

2. A formulation according to Claim 1, wherein said first artificial sweetener is selected from an acesulpham salt, a sulphimide sweetener, a sulphamate sweetener, an aspartyl peptide ester sweetener, a dihydrochalchone sweetener, sucralose, thaumatin, stevioside and glycyrrhin.

3. A formulation according to Claim 1 or Claim 2, wherein said formulation includes a second artificial sweetener selected from an acesulpham salt, a sulphimide sweetener, a sulphamate sweetener, an aspartyl peptide ester sweetener, a dihydrochalchone sweetener, sucralose thaumatin, stevioside and glycyrrhin.

4. A formulation according to claim 3, said formulation including at least 30 wt% of said first artificial sweetener and at least 30 wt% of said second artificial sweetener.

5. A formulation according to Claim 3 or Claim 4, wherein said first artificial sweetener is an acesulpham salt and said second artificial sweetener is an aspartyl peptide ester sweetener.

6. A formulation according to any preceding claim, wherein said flavour means is a fruit flavour enhancer.

7. A formulation according to any preceding claim, wherein said flavour means is preferably of general formula
R¹-R³-COR
where R¹ represents an optionally-substituted phenyl group; R² represents an optionally-substituted alkyl group; and R³ represents an optionally-substituted alkylyl group.

8. A formulation according to any preceding claim, wherein said sweetener formulation includes at least 0.01 wt% and less than 1 wt% of said flavour means; and the ratio of the wt% of said first sweetener to said flavour means is at least 300 and is less than 700.

9. A formulation according to any preceding claim, including at least 0.02 wt% and less than 2 wt% of a first flavour enhancer which is selected from a pyrone derivative and isomerized hop extract, wherein the ratio of the flavour means to said first flavour enhancer is at least 0.1 and is less than 2.

10. A formulation according to any preceding claim, including at least 0.01 wt% and less than 1 wt% of a second flavour enhancer which is an amino acid, wherein the ratio of the weight of said flavour means to said second flavour enhancer is at least 0.1 and is less than 3.

11. A formulation according to any preceding claim, including a salt of a chloride or a carbonate.

12. A diluted sweetener formulation comprising a formulation according to any preceding claim, in combination with a diluent.

13. A method of sweetening comprising contacting a material to be sweetened with a formulation according to any preceding.

14. A material sweetened with a formulation according to any of Claims 1 to 12.
